# EUROPEAN PATENT APPLICATION

(11) **EP 4 811 571 A1**
(43) Date of publication of application: **23.09.2026**
(21) Application number: 26160710.5
(22) Date of filing: 25.02.2026
(51) Int. Cl.: H02B 1/21, H02B 1/36

(54) **INTEGRATED POWER DISTRIBUTION APPARATUS AND POWER DISTRIBUTION CABINET**

(30) Priority: 17.03.2025 CN 202520465542 U
(71) Applicant: SCHNEIDER ELECTRIC INDUSTRIES SAS, 92500 Rueil-Malmaison (FR)
(72) Inventor: LI, Zhirong, Shaanxi, 710076 (CN); XIA, Xuedong, Shanghai, 201203 (CN); WANG, Shunyao, Shanghai, 201203 (CN); LIU, Jiawei, Shanghai, 201203 (CN); TIAN, Simon, Shanghai, 201203 (CN); CHEN, Kaiwei, Shanghai, 201203 (CN)
(74) Representative: Openshaw & Co.

(57) **Abstract**

Embodiments of the disclosure provide an integrated power distribution apparatus and a power distribution cabinet. The integrated power distribution apparatus includes: a rack (1) including a receiving cavity (11) formed in the rack (1) and adapted to extend from an operation side of the rack (1) toward a wiring side of the rack (1); a plurality of functional modules (2) arranged in the receiving cavity (11 and coupled to the rack (1), and the plurality of functional modules (2) being arranged in an arrangement direction; a busbar (3) arranged on the wiring side of the rack (1) and coupled to and electrically connected to the plurality of functional modules (2); and a communication bar (4) arranged on the wiring side of the rack (1) and coupled to the plurality of functional modules (2).

## Description

### FIELD

Example embodiments of the present disclosure generally relate to the field of electrical equipment, and in particular, to an integrated power distribution apparatus and a power distribution cabinet.

### BACKGROUND

As an important component of modern power systems, integrated power distribution apparatuses have been widely used in the field of industrial and civil buildings in recent years. By modular integration of the traditional distributed power distribution unit, centralized, intelligent and compact design of the power distribution function is realized.

### SUMMARY

In a first aspect of the present disclosure, an integrated power distribution apparatus is provided. The integrated power distribution apparatus includes a rack comprising a receiving cavity formed in the rack and adapted to extend from an operation side of the rack toward a wiring side of the rack; a plurality of functional modules arranged in the receiving cavity and coupled to the rack, and the plurality of functional modules being arranged in an arrangement direction; a busbar arranged on the wiring side of the rack coupled to and electrically connected to the plurality of functional modules; and a communication bar arranged on the wiring side of the rack and coupled to the plurality of functional modules.

In some embodiments, the functional module includes at least one of a circuit breaker unit, a gateway unit, and a solid-state switching unit.

In some embodiments, a width of the gateway unit in the arrangement direction is an integer multiple of a width of the circuit breaker unit in the arrangement direction, and/or a width of the gateway unit in the arrangement direction is an integer multiple of a width of the solid-state switching unit in the arrangement direction.

In some embodiments, the gateway unit is arranged at any end of the receiving cavity in the arrangement direction.

In some embodiments, the functional module includes: a body; and a pair of mounting holes respectively arranged close to two ends of the body in a vertical direction, and each mounting hole extends in a mounting direction, and where the integrated power distribution apparatus further includes: a pair of fasteners, each pair of fasteners being respectively arranged within the pair of mounting holes of the functional module and coupled to the rack to fix the functional module to the rack.

In some embodiments, the integrated power distribution apparatus further includes a busbar support coupled to the wiring side of the rack and at least partially receiving the busbar.

In some embodiments, the communication bar includes a plurality of communication interfaces extending respectively in a mounting direction toward the functional module, so as to be at least partially inserted into the functional module.

In some embodiments, the rack includes: a pair of limit rails arranged on an inner wall of the receiving cavity, each limit rail extending in a mounting direction, the pair of limit rails being arranged in the arrangement direction, and a predetermined spacing being provided between the pair of limit rails, and wherein the functional module includes: a body; and a sliding protrusion protruding from the body in a vertical direction and arranged in the spacing between the pair of limit rails to allow the functional module to enter the receiving cavity in the mounting direction.

In some embodiments, the rack further includes a guide protrusion formed in the receiving cavity and arranged between the pair of limit rails, and a middle portion of the guide protrusion bending toward the operation side of the rack.

The plurality of functional modules may be slidably mounted in the rack, and when the plurality of functional modules are inserted into the rack, the plurality of functional modules are connected to the busbar and the communication bar in the integrated power distribution apparatus. In this way, the user may select to install an appropriate function module according to actual application requirements, thereby improving convenience of using the power distribution apparatus.

In a second aspect of the present disclosure, a power distribution cabinet is provided. The power distribution cabinet includes a cabinet body and the integrated power distribution apparatus according to the first aspect of the present disclosure.

It should be understood that the content described in this content section is not intended to limit the key features or important features of embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, wherein:
FIG. 1 illustrates a schematic diagram of an overall structure of an integrated power distribution apparatus according to some embodiments of the present disclosure;
FIG. 2 illustrates a front structural schematic diagram of an integrated power distribution apparatus according to some embodiments of the present disclosure;
FIG. 3 illustrates a back structure schematic diagram of an integrated power distribution apparatus according to some embodiments of the present disclosure; and
FIG. 4 illustrates an exploded view of an integrated power distribution apparatus according to some embodiments of the present disclosure.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms, and should not be construed as limited to embodiments set forth herein, but rather, these embodiments are provided for a more thorough and complete understanding of the present disclosure. It should be understood that the drawings and embodiments of the present disclosure are for illustrative purposes only and are not intended to limit the scope of the present disclosure.

It should be noted that the title of any section/subsection provided herein is not limiting. Various embodiments are described throughout and any type of embodiments may be included in any section/subsection. Furthermore, embodiments described in any section/subsection may be combined in any manner with the same section/subsection and/or any other embodiment described in different sections/subsections.

In the description of embodiments of the present disclosure, the terms "including" and the like should be understood to include "including but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below. The terms "first," "second," and the like may refer to different or identical objects. Other explicit and implicit definitions may also be included below.

As mentioned briefly above, a conventional integrated power distribution apparatus is complex in structure and low in adaptability to various functional modules. Therefore, it cannot adapt to current complex power distribution requirements.

Embodiments of the present disclosure provide an integrated power distribution apparatus and a power distribution cabinet to solve or at least partially solve the above problems and other potential problems existing in the present disclosure. According to the integrated power distribution apparatus provided by embodiments of the present disclosure, the plurality of functional modules are slidably mounted in the rack, and when the plurality of functional modules are inserted into the rack, the plurality of functional modules are connected to the busbar and the communication bar in the integrated power distribution apparatus. In this way, the user may select to install an appropriate function module according to actual application requirements, thereby improving convenience of using the power distribution apparatus.

The power distribution cabinet provided by embodiments of the present disclosure generally comprises a cabinet body and at least one power distribution apparatus arranged in the cabinet body. The power distribution apparatus is connected to at least a power supply busbar and a signal line to realize the power distribution function on the load side.

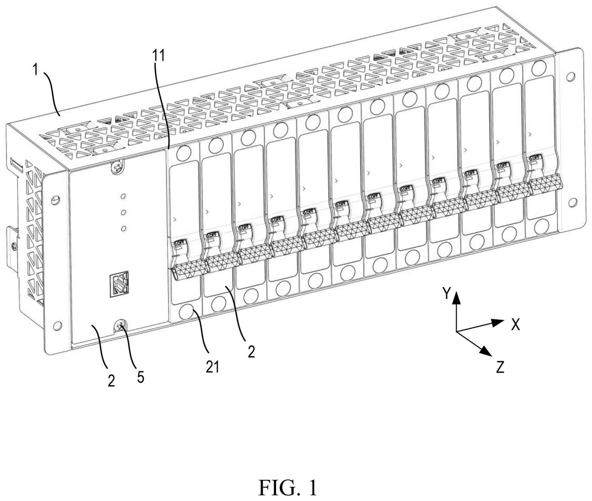

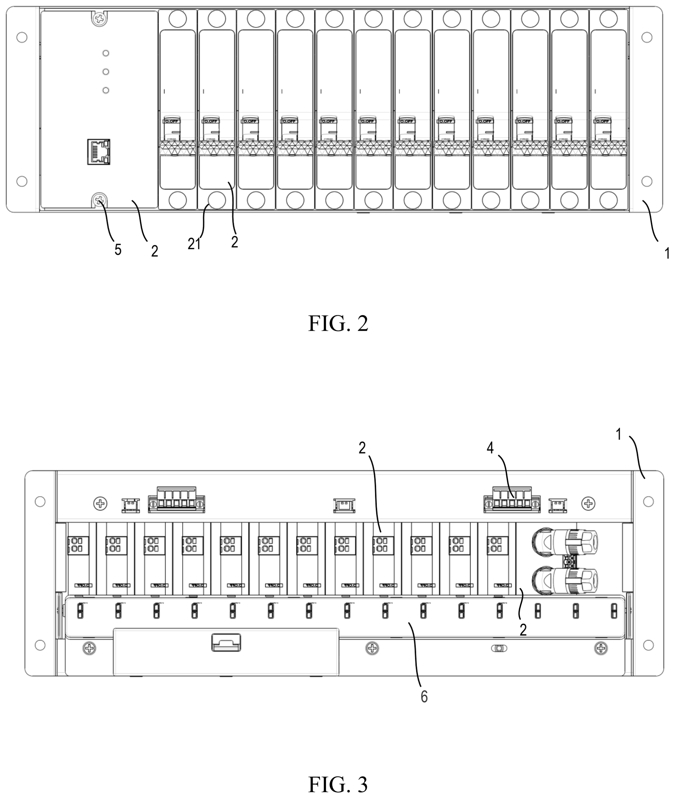

FIG. 1 shows a schematic diagram of an overall structure of an integrated power distribution apparatus according to some embodiments of the present disclosure. FIGS. 2 and 3 respectively show a front structure and a back structure of an integrated power distribution apparatus according to some embodiments of the present disclosure. As shown in FIG. 1 to FIG. 3, the integrated power distribution apparatus generally includes a rack 1, a plurality of functional modules 2 arranged in the rack 1, a busbar 3 and a communication bar 4 arranged on a wiring side of the rack 1 and coupled to the plurality of functional modules 2.

The rack 1 includes a receiving cavity 11 formed in the rack 1 and adapted to connect an operation side of the rack 1 to a wiring side of the rack 1. The plurality of functional modules 2 are arranged in the receiving cavity 11 in an arrangement direction X. The functional module 2 is slidably connected to an inner wall of the receiving cavity 11, so that the functional module 2 may enter the receiving cavity 11 in a mounting direction Z perpendicular to the arrangement direction X. The busbar 3 and the communication bar 4 are respectively coupled to the functional modules 2 sliding inside the receiving cavity 11. Thus, the busbar 3 may supply power to the functional modules 2, and the communication bar 4 may communicate with the functional modules 2. In some embodiments, the busbar 3 and the communication bar 4 are arranged in a vertical direction Y perpendicular to the arrangement direction X.

In some embodiments, the functional module 2 includes at least one of a circuit breaker unit, a gateway unit, and a solid-state switching unit. The circuit breaker unit is adapted to detect a power consumption status of a connected line and to cut off the line during a power abnormality of the connected line. The gateway unit may communicate with the circuit breaker unit through the communication bar 4, and may locally store the power consumption status of the line connected to the circuit breaker unit and an operation status of the circuit breaker unit. The solid-state switching unit may turn on or off the line based on a control signal.

In addition, the gateway unit may further communicate with an external apparatus through the communication bar 4, for example, the gateway unit may upload locally stored data related to the line power consumption status and the circuit breaker operation status to a remote server. In some embodiments, the plurality of functional modules 2 in the rack 1 may include one gateway unit and a plurality of circuit breaker units. In some embodiments, the plurality of functional modules 2 in the rack 1 may include one gateway unit and a plurality of solid-state switching units. In some other embodiments, the plurality of functional modules 2 may also include a plurality of circuit breaker units or a plurality of gateway units.

To improve the flexibility of arrangement of the circuit breaker unit and the gateway unit inside the rack 1, in some embodiments, the gateway unit is further configured such that its width in the arrangement direction X is an integer multiple of a width of the circuit breaker unit in the arrangement direction X. For example, the width of the gateway unit may be three times the width of the circuit breaker unit, therefore, the gateway unit and the circuit breaker unit may be arranged in the rack 1 in any suitable manner. Similarly, in some embodiments, the gateway unit may also be configured such that its width in the arrangement direction X is an integer multiple of a width of the solid-state switching unit in the arrangement direction X.

In some embodiments, the gateway unit may be arranged at any end of the plurality of circuit breaker units in the arrangement direction X. In some other embodiments, the gateway unit may also be arranged between two circuit breaker units. In this way, the flexibility and convenience of the on-site installation layout of the integrated power distribution apparatus can be improved.

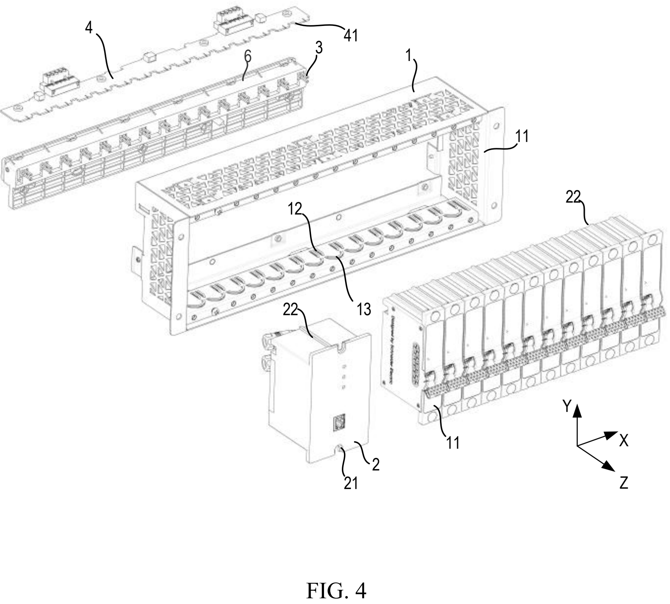

FIG. 4 illustrates an exploded view according to some embodiments of the present disclosure. As shown in FIG. 4, in some embodiments, the functional module 2 is slidably connected to the rack 1. Specifically, the functional module 2 includes a body and a sliding protrusion 22 protruding from the body in the vertical direction Y. The sliding protrusion 22 extends in the mounting direction Z. Correspondingly, the rack 1 further includes limit rails 12 arranged in pairs. The pair of limit rails 12 are arranged in the receiving cavity 11 and protrude from the inner wall of the receiving cavity 11.

Each of the limit rails 12 extends in the mounting direction Z, and the pair of limit rails 12 are arranged in the arrangement direction X and spaced apart by a predetermined distance. Therefore, when the functional module 2 slides into the rack 1, the sliding protrusion 22 can be slid into a spacing between the pair of limit rails 12, and move in the mounting direction Z under the constraint of the limit rail 12, so that the functional module 2 can enter the receiving cavity 11 in the mounting direction Z. When the staff perform on-site installation or maintenance, the functional module 2 can be detached from or installed in the rack 1 in a sliding manner, so that the convenience of installation and maintenance of the integrated power distribution apparatus can be improved.

In some embodiments, the sliding protrusions 22 of the functional modules 2 may be arranged in pairs. The pair of sliding protrusions 22 are respectively arranged on side walls at two ends of the body in the vertical direction Y, and the pair of sliding protrusions 22 respectively protrude from the body in opposite directions. The plurality of limit rails 12 in the rack 1 are respectively arranged on the inner walls at two ends of the receiving cavity 11 in the vertical direction Y and cooperate with the pair of sliding protrusions 22. Through cooperation of the sliding protrusions 22 at two ends of the body and the corresponding limit rail 12, the stability of the functional module 2 sliding in the rack 1 can be further improved.

In some embodiments, the rack 1 further includes a plurality of guide protrusions 13 protruding in the receiving cavity 11 and arranged between the pair of limit rails 12. Two ends of the guide protrusion 13 respectively extend toward one end of the limit rail 12 close to the operation side of the rack 1, and a middle portion of the guide protrusion 13 bends towards the operation side of the rack 1. In this way, the guide protrusion 13 may be in contact with the sliding protrusion 22 during insertion of the functional module 2 into the receiving cavity 11. Under the guidance of the guide protrusion 13, the sliding protrusion 22 smoothly enters the spacing between the pair of limit rails 12, thereby improving the convenience of installation of the functional module.

In some embodiments, the functional module 2 further includes a pair of mounting holes 21 formed on the body and respectively close to two ends of the body along the vertical direction Y. An axis of the mounting hole 21 is parallel to the mounting direction Z. A fastener 5 passes through the mounting hole 21, and the fastener 5 passes through the mounting hole 21 and is coupled to the rack 1. Therefore, after the functional module is inserted into the receiving cavity 11, the functional module can be fixed to the rack 1 through the coupling of the fastener 5 and the rack 1. In some embodiments, the fastener 5 may be a bolt, and the bolt passes through a fastening hole and then is threadedly engaged with the rack 1, thereby fixing the functional module to the rack 1.

In some embodiments, the integrated power distribution apparatus further includes a busbar support 6 arranged on the wiring side of the rack 1 and adapted to at least partially receive the busbar 3. The busbar support 6 is coupled to the rack to fix the busbar 3, on one hand, the busbar 3 may be supported, so that when the functional module 2 is inserted into the rack, the busbar 3 may be coupled to the functional module 2, and on the other hand, the busbar support 6 is wrapped on an outer side of the busbar 3 to improve the electrical safety of the integrated power distribution apparatus.

In some embodiments, the communication bar 4 includes a plurality of communication interfaces 41 extending along the mounting direction Z toward the functional module 2. During coupling of the plurality of functional modules 2 to the rack 1, the plurality of communication interfaces 41 may be at least partially inserted into corresponding functional modules 2, whereby the functional modules 2 may communicate through the communication bar 4. In some embodiments, the communication bar 4 is a printed circuit board, and a corresponding electrical component is integrated on the communication bar 4. The communication interface 41 may be a conductive contact formed on a printed circuit board.

Various implementations of the present disclosure have been described above, which are illustrative, not exhaustive, and are not limited to the implementations disclosed. Many modifications and variations will be apparent to those of ordinary skill in the art without departing from the scope of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. An integrated power distribution apparatus, integrated power distribution apparatus comprising:
a rack (1) comprising a receiving cavity (11) formed in the rack (1) and adapted to extend from an operation side of the rack (1) toward a wiring side of the rack (1);
a plurality of functional modules (2) arranged in the receiving cavity (11) and coupled to the rack (1), the plurality of functional modules (2) being arranged in an arrangement direction (X);
a busbar (3) arranged on the wiring side of the rack (1), coupled to and electrically connected to the plurality of functional modules (2); and
a communication bar (4) arranged on the wiring side of the rack (1) and coupled to the plurality of functional modules (2).

2. The integrated power distribution apparatus of claim 1, wherein the functional module (2) comprises at least one of a circuit breaker unit, a gateway unit or a solid-state switching unit.

3. The integrated power distribution apparatus of claim 2, wherein at least one of:
a width of the gateway unit in the arrangement direction (X) is an integer multiple of a width of the circuit breaker unit in the arrangement direction (X), or
the width of the gateway unit in the arrangement direction (X) is an integer multiple of a width of the solid-state switching unit in the arrangement direction (X).

4. The integrated power distribution apparatus of claim 2 or claim 3, wherein the gateway unit is arranged at any end of the receiving cavity (11) in the arrangement direction (X).

5. The integrated power distribution apparatus of any of claims 1 to 4, claim the functional module (2) comprises:
a body; and
a pair of mounting holes (21) respectively arranged close to two ends of the body in a vertical direction (Y), and each mounting hole (21) extends in a mounting direction (Z), and
wherein the integrated power distribution apparatus comprises:
a pair of fasteners (5), each pair of fasteners (5) being respectively arranged within the pair of mounting holes (21) of the functional module (2) and coupled to the rack (1) to fix the functional module (2) to the rack (1).

6. The integrated power distribution apparatus of any of claims 1 to 5, comprising:
a busbar support (6) coupled to the wiring side of the rack (1) and at least partially receiving the busbar (3).

7. The integrated power distribution apparatus of any of claims 1 to 6, wherein the communication bar (4) comprises:
a plurality of communication interfaces (41) extending respectively in a mounting direction (Z) toward the functional module (2), so as to be at least partially inserted into the functional module (2).

8. The integrated power distribution apparatus of any of claims 1 to 7, wherein the rack (1) comprises:
a pair of limit rails (12) arranged on an inner wall of the receiving cavity (11), each limit rail (12) extending in a mounting direction (Z), the pair of limit rails (12) being arranged in the arrangement direction (X), and a predetermined spacing being provided between the pair of limit rails (12), and
wherein the functional module (2) comprises:
a body; and
a sliding protrusion (22) protruding from the body in a vertical direction (Y) and arranged in the spacing between the pair of limit rails (12) to allow the functional module (2) to enter the receiving cavity (11) in the mounting direction (Z).

9. The integrated power distribution apparatus of claim 8, wherein the rack (1) comprises:
a guide protrusion (13) formed in the receiving cavity (11) and arranged between the pair of limit rails (12), and a middle portion of the guide protrusion (13) bending towards the operation side of the rack (1).

10. A power distribution cabinet, comprising:
a cabinet; and
the integrated power distribution apparatus of any of claims 1 to 9.
